**Europäisches Patentamt**

**European Patent Office**

**Office européen des brevets**

(19)

(11) Publication number : **0 452 357 B1**

(12)

# EUROPEAN PATENT SPECIFICATION

(45) Date of publication of patent specification :
**24.05.95 Bulletin 95/21**

(51) Int. Cl.⁶ : **F16L 19/02,** F16L 27/08,
F16L 17/08

(21) Application number : **90901140.5**

(22) Date of filing : **08.11.89**

(86) International application number :
**PCT/US89/04990**

(87) International publication number :
**WO 91/07617 30.05.91 Gazette 91/12**

(54) HIGH PRESSURE PIPE COUPLING.

(43) Date of publication of application :
**23.10.91 Bulletin 91/43**

(45) Publication of the grant of the patent :
**24.05.95 Bulletin 95/21**

(84) Designated Contracting States :
**DE FR GB IT NL**

(56) References cited :
**US-A- 2 863 679**
**US-A- 3 628 812**
**US-A- 4 221 408**

(73) Proprietor : **MANIFOLD SYSTEMS, INC.**
**300 W. Main St.**
**Alice, TX 78332 (US)**

(72) Inventor : **BROOKS, Robert, T.**
**70 Lochside Road**
**Denmore Park**
**Bridge of Don Aberdeen AB2 8QW (GB)**

(74) Representative : **Abbie, Andrew Kenneth et al**
**R.G.C. Jenkins & Co.**
**26 Caxton Street**
**London SW1H 0RJ (GB)**

## Description

### Field of the Invention

This invention relates to pipe connector or coupling devices, and more particularly to metal-to-metal sealing connectors for high pressure applications where the connectors can be utilized with corrosive liquids and are capable of sealing under both static and dynamic connector conditions.

### Background of the Invention

In oil field and other high pressure applications, tubular pipes are connected to one another by pipe couplers or connectors where the connectors utilize a metal-to-metal contact seal for preventing fluid leakage from the interior of the coupling. A metal-to-metal seal in a coupling is principally dependent on the preloading of a sealing member in the coupling to get a tight seal and to prevent leakage where an internal pipe or coupler pressure induces longitudinal stress in the coupling members.

Metal-to-metal seals currently in use are:

1) the API flange - this is a widely used coupling for high pressure fluids and involves a face-to-face coupling of flanges with an interposed metal sealing member between the flanges. The metal sealing member is usually a flat faced seal that is crushed between the two flat faced hubs on the flanges,

2) a "Grayloc" type connector - this connector is comprised of facing metal seal ring hubs and an annular clamp assembly. An internal metal sealing ring resembling an inverted "T" in cross section is disposed between the hubs. The clamp assembly fits over the outer annular surface of the two facing hubs and is forced radially inward by making up the clamp bolts to draw the facing hubs together and to compress with the sealing ring rib between the hub surfaces. As the hubs are drawn together by the clamp assembly, the internal seal ring lips engage and deflect against the inner sealing surfaces on the hubs. The deflection of the seal ring lips elastically preloads the lips of the seal ring against the inner sealing surfaces of the hubs thereby forming a preloaded seal. In use, internal pressure acts on the seal ring lips so that the sealing action of the lips is both preloaded and pressure-energized. However, if the internal pressure becomes sufficiently great to cause the facing hubs to be displaced or moved longitudinally of one another, the seal ring lips will lose their sealing ability because the preloading sealing compression between the hubs and the seal is lost. Also the metal seal ring has a 20° (sometimes 25°) bevel so that the seal lips do not radially compensate for movement of the seal lips when the hubs are spread apart from one another.

3) A "Weco" wing union - this coupler has metal-to-metal compression seals disposed between connector surfaces and uses a lip type elastomer replaceable seal to protect the metal primary seal.

4) A "dynetor" connector - this is a metal-to-metal connector coupling with a reusable annular metal seal. The annular metal seal has cylindrical ends so that some longitudinal expansion or spreading between the coupling parts can occur without losing the seal in the annular seal bores.

5) The Nicholson flange - this is an annular shaped gasket which is used between flanges and flange grooves. The flange seal, when compressed between flanges, will expand with longitudinal movement but the seal will fail because the gasket expands longitudinally and thus will fail at the gap.

6) The Nicholson lip C seal - this is a seal which depends upon point contact for sealing and is a round seal.

7) The Cameron AX or CX gasket illustrated in the 1988-89 Composite Catalog, pgs 683, 685 and 826. The AX and CX gasket is a tubular member which has an external taper on each end and sealing means which engage tapered surfaces in adjoining connectors.

US-A-2863679 shows a coupling device for tubular pipe members subjected to differential pressure, comprising first and second metal tubular coupling members with end portions have frusto conical surfaces defining therebetween a V shaped groove in which is received a seal forming element in the form of a ring of substantially V shape in radial cross-section, the coupling members being attached together, the sealing ring having a softened external surface layer deformable to engage the V shaped groove, the sealing member expanding radially outwardly on application of internal pressure within the pipe.

### Summary of the Invention

According to the present invention there is provided a coupling device for tubular pipe members subjected to differential pressure, said coupling device including first and second longitudinally aligned metal tubular coupling members respectively with end portions arranged for a facing relationship where said end portions respectively have adjoining frusto conical surfaces defining a V shaped groove and spaced apart surface portions at the apex of said V shaped groove defining an expansion gap between said end portions; a substantially V-shaped metal annular ring sealing member sized for initial receipt in said V shaped groove so that there is a V shaped spacing between the outer surfaces of the sealing member and said frusto conical surfaces in a relaxed condition of said ring sealing member; said coupling members being attachable together; and retaining means for retaining said sealing member in said V shaped groove; so that, upon coupling of said coupling members to one another, the outer surfaces of said ring sealing member sealingly engage said frusto conical surfaces in a preloaded and assembled condition of the coupling device; said sealing member being arranged to move radially in response to differential pressure across said coupling device; characterised in that said sealing member is shaped to comprise a pair of wing portions defined between inner and outer V shaped surfaces, and in that the sealing member is not of hardened carbon steel, and is of a material sufficiently elastically resilient that said wing portions can resiliently flex longitudinally inwardly and outwardly, to maintain contact with said frusto conical surfaces when said expansion gap varies in response to differential pressure across said coupling device, and to resiliently return to their original positions after said flexing.

When the coupling members are coupled to one another the outer surfaces of the V shaped sealing ring member are brought into engagement with the surfaces of the V shaped sealing groove. This movement of the sealing ring member flexes the "wings" of the sealing ring member and provides a sealing force in the outer edge surfaces of the V shaped sealing ring member.

Each of the coupling members preferably has a counterbore or cylindrical recess in the central bore so that a tubular retainer ring can be inserted in the counterbores between the sealing ring member and the V shaped sealing groove. The annular sealing ring member preferably has an overall transverse width approximately twice as great as the thickness of the sealing member between the apex of the outer surfaces and the apex of the inner surfaces of the sealing ring member.

If the internal pressure in the coupling causes the coupling members to move longitudinally relative to one another or try to move longitudinally apart, the outer edge surfaces of the V shaped sealing ring member will expand radially and the outer edge surfaces will expand axially because of the flexing of the "wings" of the sealing ring member. Thus, axial movement of the sealing groove surfaces of the coupling members is taken up by the outer edge surfaces of the sealing ring member moving radially outwardly and moving axially to offset a longitudinal spacing gap between the coupling members caused by internal pressure. If the internal pressure thereafter decreases and the spacing gap between the coupling members begins to decrease, the outer edge surfaces of the sealing ring member will contract radially inwardly due to elasticity of the sealing ring material and the compression force induced by the coupling members moving back together.

Because the sealing ring member is made of metal it is ideally suited for corrosive fluid environments as there are no elastomers subject to chemical attack and because the sealing ring burnishes the sealing groove surfaces of the coupling member and the seal lips of the sealing ring member are flexible or resilient. There are no grooves nor entrapping seal profiles for corrosive fluids to remain in the connector to cause corrosion.

In the sealing ring member, the leading or base edges of the sealing ring member are the initial sealing points on the V shaped groove surfaces. The dissimilar angles between the sealing ring member with respect to the V shaped groove surfaces in the connector members insures that an initial preload can be applied to the sealing points of the seal ring member in assembly with only a nominal amount of torque applied to the coupling nut member. Thus, the coupling will be sealed at low pressures. The internal sleeve in the counterbore isolates the sealing ring member and insures a smooth straight bore through the assembled connector.

The sealing ring member can be used internally or externally or in a combination internal/external arrangement for sealing against external or internal pressure differentials.

The shape of sealing ring member allows for misalignment of the coupling members during assembly. The internal sleeve protects the V sealing member from damage during assembly and disassembly especially during a stabbing operation for joining the coupling members to one another. When the coupling is disassembled, the design of the V sealing member allows it to spring back to its original shape due to its elasticity within its range of resiliency and it can be reused.

The sealing member is ideal for applications where rotational motions or movements may be involved. Since the sealing ring member flexes during relative rotational movement with changes in internal pressure, alignment or eccentricity, the pressure seal is constantly maintained.

Description of the Drawings

FIG. 1 is a view in longitudinal cross section through a coupling member and illustrates the components in disassembled positions;
FIG. 2 is a view in partial cross section through the sealing member sealing position;
FIG. 3 is a view in longitudinal cross section through a coupling member which is adapted to accommodate a relative turning movement; and
FIG. 4 is a view in partial cross section of another form of the present invention.

Description of the Present Invention

The present invention relates to connectors or couplings for pipes typically in the range of sizes from 25 to 150mm (one to six inch) diameters to meet ANSI pipe schedules, API bore sizes and other industry standards. The connector or coupling is capable of maintaining seal integrity of working pressures up to 138MPa (20,000 p.s.i.).

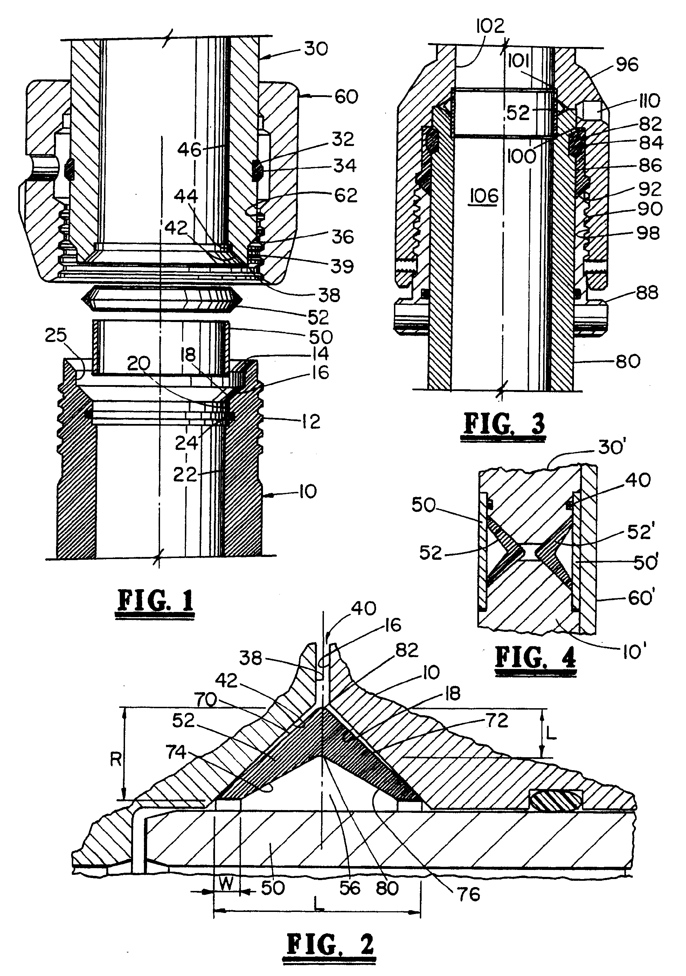

A static connector or coupling embodying the present invention is illustrated in FIG. 1 wherein a first connector part or coupling member 10 on a metal tubular pipe member has an external acme thread 12. The terminal end of the coupling member 10 has a first outer frusto conical surface 14. The conical surface 14 adjoins a cylindrical surface 25. The cylindrical surface 25 adjoins a transverse annular surface 16. The transverse surface 16 adjoins a second inner frusto conical surface 18. The frusto conical surface 18, in turn, adjoins a cylindrical surface 20 which is a counterbore to the main bore 22 of the coupling member 10. An annular o-ring groove 24 and o-ring is provided in the cylindrical surface 20.

The mating second connector part is a metal tubular coupling member 30 on a pipe member which has an annular groove 32 for receiving a C type locking ring 34. The end surface of the second connector member 30 is configured with a frusto conical outer surface 36 arranged complimentary to the first frusto conical surface 14 of the first connector member 10. A cylindrical surface 39 adjoins the frusto conical surface 36 and extends to a transverse annular surface 38. When the frusto conical surface 14 is in engagement with the frusto conical surface 36 there is an expansion gap 40 defined between the surfaces 16,38. (See FIG. 2). This permits engagement of the frusto conical surfaces 18,36 while spacing the transverse surfaces from one another with an expansion gap 40 for purposes which will be explained hereinafter. The transverse surface 38 on the second connector member adjoins an inner frusto conical surface 42 where the frusto conical surface 42 extends to a counterbore 44 and the counterbore 44 adjoins the main bore 46 of the connector member 30. The inner frusto conical surface 42 of the second connector 30 and the inner frusto conical surface 18 of the first connector 10 define a "V" shaped sealing groove with an apex lying in the expansion gap 40. The surfaces of the sealing groove have an included angle of 90° therebetween. (See FIG. 2).

An annular metal sealing ring member 52 which is constructed from resilient metal (such as Inconel 718 (TM), which has a relatively low modulus of elasticity as compared to hardened carbon steel, the composition of which is given in Table 1)

### Table 1 - Limiting Chemical Composition, %

| Nickel | | | Cobalt | 1.00 | max |
|---|---|---|---|---|---|
| (plus Cobalt) | 50.00-55.00 | | Carbon | 0.08 | max |
| Chromium | 17.00-21.00 | | Manganese | 0.35 | max |
| Iron | Bal. | | Silicon | 0.35 | max |
| Columbium | | | Phosphorus | 0.015 | max |
| (plus Tantalum) | 4.75-5.50 | | Sulfur | 0.015 | max |
| Molybdenum | 2.80-3.30 | | Boron | 0.006 | max |
| Titanium | 0.65-1.15 | | Copper | 0.30 | max |
| Aluminum | 0.20-0.80 | | | | |

is V shaped in cross section and is received within the V shaped sealing groove defined by the surfaces 18,42. A tubular retainer member 50 is disposed in the counterbores 20,44 to isolate the sealing ring member 52 from the bores 22,46 of the connector members 10,30. An o-ring seal 24 is located in a counterbore in one of the connector members to provide a retaining device with respect to the retainer member 50 so that a protected chamber 56 (from the flow path) is formed within the V shaped groove (see FIG. 2) where the V shaped groove defined by the opposed frusto conical surfaces 18,42 and the exterior surface of the retainer member 50.

A tubular nut 60 with matching internal acme threads 62 is adapted to couple the two connector parts 10,30 to one another. A C-ring 34 disposed in the annular groove 32 is utilized for a stop when the nut 60 threadedly couples the connector members to one another. The C-ring also limits the longitudinal travel of nut in the opposite direction when the nut is released from a coupling position. A side opening is provided in the nut for access to the C-ring for installation and removal of the nut 60 and the C-ring 34. While not illustrated, it is well within the skill of the art to utilize a double nut arrangement for coupling instead of a single nut arrangement

EP 0 452 357 B1

as illustrated in the drawing.

Referring now to FIG. 2 which is an enlarged view of the sealing ring member and V shaped sealing groove construction, the annular sealing ring member 52 is shown in a position just prior to tightening of the nut 60 to firmly couple the connector members 10,30 to one another. In the relaxed position shown, the sealing ring member 52 is V shaped in cross section. The included angle between the outer inclined surfaces 70,72 of the sealing ring member 52 is preferably 94°. The included angle between the inner inclined surfaces 74,76 of the sealing ring member 52 is 120°. The angle of the internal V-surfaces 74,76 is 30° with respect to the axis of the sealing ring member. The angle between the axis for a tubular member and the frusto conical surface 18 or 42 is 45°. The width "W" of a cylindrical surface between the internal and external V-surfaces 70,74 or 72,76 is approximately one half of the distance or height "h" between the apexes 80,82 of the internal and external surfaces 74,76 and 70,72. The overall radial height dimension "R" between a cylindrical base surface and the outer apex 82 is approximately one-half of the distance or length "L" between the base points of the external V-surfaces 70,72.

When the nut 60 is torqued up to bring the frusto conical surfaces 14,36 into contact with one another, the spacing or gap 40 between transverse surfaces is approximately 0.25 to 0.3mm (0.010 to 0.012 inches). In moving the connector members 10,30 toward one another to bring the frusto conical surfaces into contact with one another, the annular base sections of the sealing ring member 52 are flexed inwardly with the lower edge surfaces sliding along the frusto conical surfaces 18,42 to provide a debris-cleaning feature. The initial nut torque up of the connection can be hand tight and when torqued up, the sealing ring member 52 has its annular frusto conical surfaces 70,72 moved into contact with the V-groove surfaces 18,42. In this condition there is a preloading or flexing, of the lips of sealing ring member 52 and the outer edges of the ring member 52 are flexed radially inwardly and moved longitudinally toward one another. The preloading of the ring member 52 provides low pressure seal.

When a pressure differential occurs because of pressure within the pipe, the internal pressure is accessed around the retainer ring 50 to act upon the internal V shaped surfaces 74,76 or the "wings" of the sealing ring member 52 causing the wings of the sealing ring member 52 to be urged radially outward as well as urging the edges of the sealing ring member longitudinally (at the base sections) because the gap 40 widens. As the internal pressure is sufficient to cause the coupling members to move longitudinally away from one another and increase the initial spacing of the gap 40, the edge sealing surfaces of the sealing ring member 52 (at the base sections) will follow any longitudinal separation of the coupling members from one another due to pressure. The edge sealing surfaces will normally flex outwardly because they are preloaded. At the same time the edge sealing surfaces of the sealing ring member 52 will expand radially. Conversely, if an increased pressure causing a separation of the coupling members is relieved, then the edge sealing surfaces of the sealing ring member 52 (because of its inherent elasticity within the working range of resiliences and the compressive force induced by the surfaces 18,42 moving toward one another to their initial position) will contract radially and longitudinally towards its initial condition while the gap 40 between the coupling members returns towards its initial position. In this respect, the edge sealing surfaces of the sealing ring member 52 are dynamic members which compensate for the longitudinal separation of the coupling members and are resiliently returnable to their original positions.

Referring now to FIG. 3, another important form of the invention is illustrated in which a dynamic coupling for dynamic applications is illustrated. Dynamic applications are those applications in which one coupling member may be rotatively displaced relative to the other coupling member while the bore of the pipe members contains fluid under pressure. The type of turning or rotation contemplating is principally that which may be encountered by relative movements of the pipe while the pipe members are moved.

In the coupling arrangement shown in FIG. 3, a first tubular coupling member 80 is provided with an end surface having a counterbore and a frusto conical surface and a transverse surface at one end arranged similarly to the surfaces 20,18 and 16 as defined with respect to FIG. 1. On the outer surface of the coupling member 80 is an annular groove 82 to receive a C-locking ring 84. An annular bearing ring and a journal bearing 86 is disposed on the outer surface of the coupling member 80 in a longitudinal location between the C-locking ring 84 and a tubular nut member 88. The nut member 88 has an external acme thread 90 on it. The nut member and journal bearing 86 have frusto conical surfaces at a location 92 which are complimentary arranged for engagement to permit the coupling member 80 to be tightened to a female housing 96. The female housing 96 has an internal acme thread 98 and a recessed internal portion 100 extending outwardly from a central bore 102 and includes a counterbore for a retainer ring. The frusto conical surfaces at the location 92 engage and define a transverse clearance surface between the female housing and the coupling member 80 similar to the gap 40 shown in FIG. 2. A pressure type grease fitting 110 may be utilized to inject lubricant into the joint.

The coupling device as shown in FIG. 3 can be used as a swivel joint because the bearing 86 permits rotation as well as induced preloading in the seal ring 52 and the sealing ring member 52 maintains a metal-to-metal seal.

Referring now to FIG. 4, end surfaces of end-to-end arranged coupling members 10' and 30' are connected to one another in a fixed relationship by a connector housing 60' so as to define an annular clearance gap 40' when the internal sealing ring member 52 and the external sealing ring member 52' are preloaded in the inner and outer V shaped grooves and retained in place by inner and outer tubular members 50,50'. With the construction of FIG. 4 a pipe coupling within a wellhead can withstand both internal and external pressure differentials. Also, if desired, a sole external ring sealing member 52' can be employed.

It will be apparent to those skilled in the art that various changes may be made in the invention without departing from the scope thereof as defined by claim 1.

## Claims

1. A coupling device for tubular pipe members subjected to differential pressure, said coupling device including

   first and second longitudinally aligned metal tubular coupling members (10,30) respectively with end portions arranged for a facing relationship where said end portions respectively have adjoining frusto conical surfaces (18,42) defining a V shaped groove and spaced apart surface portions at the apex of said V shaped groove defining an expansion gap (40) between said end portions;

   a substantially V-shaped metal annular ring sealing member (52) sized for initial receipt in said V shaped groove so that there is a V shaped spacing between the outer surfaces of the sealing member (52) and said frusto conical surfaces in a relaxed condition of said ring sealing member (52); said coupling members (10,30) being attachable together; and retaining means (50) for retaining said sealing member (52) in said V shaped groove; so that, upon coupling of said coupling members (10,30) to one another, the outer surfaces of said ring sealing member (52) sealingly engage said frusto conical surfaces in a preloaded and assembled condition of the coupling device;

   said sealing member (52) being arranged to move radially in response to differential pressure across said coupling device;

   characterised in that said sealing member (52) is shaped to comprise a pair of wing portions (70/74), (72/76) defined between inner and outer V shaped surfaces, and in that the sealing member (52) is not of hardened carbon steel, and is of a material sufficiently elastically resilient that said wing portions (70/74, 72/76) can resiliently flex longitudinally inwardly and outwardly, to maintain contact with said frusto conical surfaces when said expansion gap (40) varies in response to differential pressure across said coupling device, and to resiliently return to their original positions after said flexing.

2. A coupling device according to claim 1 wherein said material of the sealing member is INCONEL 718 (TM) as hereinbefore defined.

3. A coupling device according to claim 1 or claim 2 in which said sealing member (52), in a relaxed condition, has an overall transverse dimension between the outer edge surfaces (70,72) of the wing portions which is approximately twice the maximum radial width of said sealing member (52).

4. A coupling device according to claim 3 wherein the transverse width of a base section between the inner and outer V shaped surfaces (70,72,74,76) of the sealing member (52) is approximately one half of the said radial width.

5. A coupling device according to any preceding claim further including bearing means (86) disposed for permitting relative rotation between said coupling members (10,30).

6. A coupling device according to claim 5 further comprising grease means (110) for providing lubricant to said bearing means (86).

7. A coupling device according to any preceding claim, wherein said coupling members (10,30) have counterbores, and said retaining means comprises a tubular retainer member (50) sized to provide a relatively smooth cylindrical surface in the coupling members (10,30).

8. A coupling device according to claim 7, wherein seal means (24) are disposed between one of the counterbores and said tubular retainer member (50).

9. A coupling device according to any preceding claim, further comprising complimentary arranged second frusto conical engaging surfaces (14,36) on said end portions where the engagement of said second frusto conical engaging surfaces (14,36) defines locations of said spaced apart surface portions and the expansion gap (40) between said end portions.

10. A coupling device according to claim 9, wherein the end portions of said first and second tubular coupling members (10,30) have adjoining frusto conical surfaces defining internal and external V shaped groves, and wherein there are provided two ring sealing members (52,52') respectively sized for initial receipt in said V shaped grooves so as to provide a V shaped spacing between each ring sealing member and the frusto conical surfaces of the respective V shaped groove.

11. A coupling device according to any of claims 1 to 4, in which the expansion gap (40) lies outwardly of the V shaped groove, and the sealing member (52) seals by applying a sealing force having a component directed radially outwardly of said first and second coupling members (10,30).

12. A coupling device according to any of claims 1 to 4, in which the expansion gap (40) lies inwardly of said V shaped groove, and the sealing member (52) seals by applying a sealing force having a component directed radially inwardly of said first and second coupling members (10,30).

13. A coupling device according to any of claims 1 to 4 comprising first and second sealing members (52,52') retained in respective first and second V shaped grooves, one exerting a sealing force having a component directed radially inwardly, and the other having a component directed radially outwardly, of said first and second coupling members (10,30).

## Patentansprüche

1. Kupplungsvorrichtung für rohrförmige, unterschiedlichen Drücken ausgesetzte Leitungsteile, mit ersten und zweiten längs ausgerichteten metallischen, rohrförmigen Kupplungsteilen (10, 30) mit jeweils einander gegenüberliegend angeordneten Endabschnitten, wobei die Endabschnitte jeweils benachbarte kegelstumpfförmige Oberflächen (18, 42) aufweisen, welche eine V-förmige Nut begrenzen, sowie voneinander beabstandete Oberflächenabschnitte am Scheitelpunkt der V-förmigen Nut, welche einen Ausdehnungsspalt (40) zwischen den Endabschnitten begrenzen; einem im wesentlichen V-förmigen, metallischen, ringförmigen Dichtungsring (52), dessen Größe für eine anfängliche Aufnahme in der V-förmigen Nut bemessen ist, so daß dort ein V-förmiger Freiraum zwischen der äußeren Oberfläche des Dichtungsteils (52) und der kegelstumpfförmigen Oberfläche bei einem entspannten Zustand des Dichtungsrings (52) vorhanden ist, wobei die Kupplungsteile (10, 30) aneinander angebracht werden können und Sicherungsmitteln (50) zum Sichern des Dichtungsteils (52) in der V-förmigen Nut, so daß die Außenflächen des Dichtungsrings (52) beim Aneinanderkuppeln der Kupplungsteile (10, 30) in einem vorbelasteten und zusammengebauten Zustand der Kupplungsvorrichtung in dichtende Anlage mit der kegelstumpfförmigen Oberfläche treten, wobei der Dichtungsring bzw. das Dichtungsteil (52) so angeordnet ist, daß es sich radial, über die Kupplungsvorrichtung in Abhängigkeit von den unterschiedlichen Drücken bewegen kann; **dadurch gekennzeichnet, daß** der Dichtungsring bzw. das Dichtungsteil (52) so geformt ist, daß es ein Paar Flügelabschnitte (70/74), (72/76) aufweist, die zwischen inneren und äußeren V-förmigen Oberflächen begrenzt sind, und daß das Dichtungsteil (52) nicht aus einem gehärteten Kohlenstoffstahl besteht und aus einem hinlänglich elastisch nachgiebigen Material besteht, so daß sich die Flügelabschnitte (70/74, 72/76) nachgiebig in Längsrichtung nach innen und nach außen biegen können, um den Kontakt zwischen den kegelstumpfförmigen Oberflächen zu erhalten, wenn der Ausdehnungsspalt (40) in Abhängigkeit vom Druckunterschied über die Kupplungsvorrichtung variiert, und um nachgiebig nach der Biegung in ihre ursprünglichen Lage zurückzukehren.

2. Kupplungsvorrichtung nach Anspruch 1, dadurch gekennzeichnet, daß das Material des Dichtungsteils das im vorstehenden definierte INCONEL 718 (TM) ist.

3. Kupplungsvorrichtung nach Anspruch 1 oder 2, dadurch gekennzeichnet, daß das Dichtungsteil (52) in einem enstpannten Zustand eine gesamte diagonale Größe aufweist zwischen den Außenkantenflächen (70, 72) der Flügelabschnitte, welche näherungsweise die doppelte radiale Maximalbreite des Dichtungsteils (52) ist.

4.  Kupplungsvorrichtung nach Anspruch 3, dadurch gekennzeichnet, daß die Breite in Querrichtung eines Basisbereichs zwischen den V-förmigen Innen- und Außenflächen (70, 72, 74, 76) des Dichtungsteils (52) näherungsweise halb so groß ist wie die radiale Breite.

5.  Kupplungsvorrichtung nach wenigstens einem der vorangehenden Ansprüche, weiter mit Lagereinrichtungen (86), die so angeordnet sind, daß sie eine relative Drehung zwischen den Kupplungsteilen (10, 30) ermöglichen.

6.  Kupplungsvorrichtung nach Anspruch 5, weiter mit Schmiereinrichtungen (110), um die Lagereinrichtungen (86) mit Schmiermittel zu versorgen.

7.  Kupplungsvorrichtung nach einem der vorangehenden Ansprüche, dadurch gekennzeichnet, daß die Kupplungsteile (10, 30) Ausfräsungen aufweisen, und daß die Sicherungsmittel ein rohrförmiges Sicherungsteil (50) aufweisen, dessen Größe geeignet ist, eine relativ glatte zylindrische Oberfläche im Kupplungsteil (10, 30) zur Verfügung zu stellen.

8.  Kupplungsvorrichtung nach Anspruch 7, dadurch gekennzeichnet, daß Dichtungsmittel (24) zwischen einer der Ausfräsungen und dem rohrförmigen Sicherungsteil (50) angeordnet sind.

9.  Kupplungsvorrichtung nach einem der vorangehenden Ansprüche, weiter mit komplementär angeordneten zweiten kegelstumpfförmigen Anlageoberflächen (14, 36) an den Endabschnitten, wobei die Anlage der zweiten kegelstumpfförmigen Anlageoberflächen (14, 36) die Lage der voneinander beabstandeten Oberflächenabschnitte und den Ausdehnungsspalt (40) zwischen diesen Endabschnitten bestimmt.

10. Kupplungsvorrichtung nach Anspruch 9, dadurch gekennzeichnet, daß die Endabschnitte des ersten und zweiten rohrförmigen Kupplungsteils (10, 30) benachbarte kegelstumpfförmige Oberflächen aufweisen, welche interne und externe V-förmige Nuten begrenzen, und
daß dort zwei Dichtungsringe (52, 52′) vorgesehen sind, deren Größe für eine anfängliche Aufnahme in den V-förmigen Nuten bemessen ist, um einen V-förmigen Freiraum zwischen jedem Dichtungsring bzw. Ringdichtungsteil und den kegelstumpfförmigen Oberflächen der jeweiligen V-förmigen Nut zu bilden.

11. Kupplungsvorrichtung nach wenigstens einem der Ansprüche 1 bis 4, dadurch gekennzeichnet, daß der Ausdehnungsspalt (40) außerhalb der V-förmigen Nut liegt, und daß das Dichtungsteil (52) durch Aufbringung einer Dichtungskraft mit einer radial von dem ersten und zweiten Kupplungsteil (10, 30) nach außen gerichteten Komponente dichtet.

12. Kupplungsvorrichtung nach einem der Ansprüche 1 bis 4, dadurch gekennzeichnet, daß der Ausdehnungsspalt (40) innerhalb der V-förmigen Nut liegt, und daß das Dichtungsteil (52) durch Aufbringen einer Dichtungskraft mit einer radial von dem ersten und zweiten Kupplungsteil (10, 30) nach innen gerichteten Komponente dichtet.

13. Kupplungsvorrichtung nach einem der Ansprüche 1 bis 4, mit einem ersten und zweiten, in der ersten bzw. zweiten V-förmigen Nut gesicherten Dichtungsteil (52, 52′), welche jeweils eine Dichtungskraft mit einer radial nach innen bzw. radial nach außen in Bezug auf das erste bzw. das zweite Kupplungsteil (10, 30) gerichteten Komponente aufbringen.

## Revendications

1.   Dispositif d'accouplement pour des éléments de tuyau tubulaires soumis à une différence de pression, ledit dispositif d'accouplement comprenant
des premier et second éléments d'accouplement tubulaires métalliques (10, 30) alignés en direction longitudinale et respectivement munis de parties d'extrémité disposées l'une en face de l'autre, lesdites parties d'extrémité présentant respectivement des surfaces tronconiques adjacentes (18, 42), qui définissent une gorge en forme de V, et des parties de surface espacées l'une de l'autre au niveau du sommet de ladite gorge en forme de V, qui définissent un interstice de dilatation (40) entre lesdites parties d'extrémité;

un élément d'étanchéité (52) consistant en une bague annulaire métallique sensiblement en forme de V, dimensionné pour être reçu au départ dans ladite gorge en forme de V, de façon qu'il y ait un écartement en forme de V entre les surfaces extérieures de l'élément d'étanchéité (52) et lesdites surfaces tronconiques, dans l'état relâché dudit élément d'étanchéité en forme de bague (52); lesdits éléments d'accouplement (10, 30) pouvant être joints ensemble; et un moyen de retenue (50) pour retenir ledit élément d'étanchéité (52) dans ladite gorge en forme de V; de sorte que, lorsque lesdits éléments d'accouplement (10, 30) sont accouplés l'un à l'autre, les surfaces extérieures dudit élément d'étanchéité en forme de bague (52) viennent en contact étanche avec lesdites surfaces tronconiques dans un état précontraint et assemblé du dispositif d'accouplement;

ledit élément d'étanchéité (52) étant conçu pour se déplacer radialement en réaction à une différence de pression à travers ledit dispositif d'accouplement;

caractérisé en ce que ledit élément d'étanchéité (52) est réalisé sous une forme telle qu'il comprend deux parties en aile (70/74), (72/76) définies entre des surfaces intérieure et extérieure profilées en V, et en ce que l'élément d'étanchéité ((52) n'est pas en acier au carbone trempé, et est en un matériau suffisamment déformable élastiquement pour que lesdites parties en aile (70/74, 72/76) puissent fléchir élastiquement, en direction longitudinale, vers l'intérieur et vers l'extérieur, afin de maintenir un contact avec lesdites surfaces tronconiques quand ledit interstice de dilatation (40) varie en réaction à une différence de pression à travers ledit dispositif d'accouplement, et de revenir élastiquement à leur position initiale après ledit fléchissement.

2. Dispositif d'accouplement selon la revendication 1, dans lequel ledit matériau de l'élément d'étanchéité est de l'INCONEL 718 (TM), tel que défini précédemment.

3. Dispositif d'accouplement selon la revendication 1 ou la revendication 2, dans lequel ledit élément d'étanchéité (52), dans l'état relâché, présente une dimension transversale d'ensemble, entre les surfaces de délimitation extérieures (70, 72) des parties en aile, qui est approximativement égale au double de la largeur radiale maximum dudit élément d'étanchéité (52).

4. Dispositif d'accouplement selon la revendication 3, dans lequel la largeur transversale d'une section de base située entre les surfaces intérieure et extérieure profilées en V (70, 72, 74, 76) de l'élément d'étanchéité (52), est approximativement égale à la moitié de ladite largeur radiale.

5. Dispositif d'accouplement selon l'une quelconque des revendications précédentes, comprenant en outre des moyens formant palier (86), positionnés de façon à permettre une rotation relative entre lesdits éléments d'accouplement (10, 30).

6. Dispositif d'accouplement selon la revendication 5, comprenant en outre des moyens de graissage (110) pour fournir du lubrifiant aux moyens formant palier (86).

7. Dispositif d'accouplement selon l'une quelconque des revendications précédentes, dans lequel lesdits moyens d'accouplement (10, 30) comportent des contre-dépouilles, et ledit moyen de retenue comprend un élément de retenue tubulaire (50) dimensionné de façon à définir une surface cylindrique relativement lisse dans les éléments d'accouplement (10, 30).

8. Dispositif d'accouplement selon la revendication 7, dans lequel des moyens d'étanchéité (24) sont placés entre l'une des contre-dépouilles et ledit élément de retenue tubulaire (50).

9. Dispositif d'accouplement selon l'une quelconque des revendications précédentes, comprenant en outre des secondes surfaces de contact tronconiques (14, 36), réalisées sous des formes complémentaires, sur lesdites parties d'extrémité, le contact desdites secondes surfaces de contact tronconiques (14, 36) définissant les emplacements desdites parties de surface espacées l'une de l'autre et l'interstice de dilatation (40) entre lesdites parties d'extrémité.

10. Dispositif d'accouplement selon la revendication 9, dans lequel les parties d'extrémité desdits premier et second éléments d'accouplement tubulaires (10, 30) présentent des surfaces tronconiques adjacentes délimitant des gorges interne et externe en forme de V, et dans lequel sont prévus deux éléments d'étanchéité en forme de bague (52, 52') respectivement dimensionnés pour être reçus au départ dans lesdites gorges en forme de V afin de définir un écartement en forme de V entre chaque élément d'étanchéité en forme de bague et les surfaces tronconiques de la gorge en forme de V respective.

11. Dispositif d'accouplement selon l'une quelconque des revendications 1 à 4, dans lequel l'interstice de dilatation (40) est situé du côté extérieur de la gorge en forme de V, et l'élément d'étanchéité (52) établit une étanchéité en appliquant une force d'étanchéité qui possède une composante dirigée radialement vers l'extérieur desdits premier et second éléments d'accouplement (10, 30).

12. Dispositif d'accouplement selon l'une quelconque des revendications 1 à 4, dans lequel l'interstice de dilatation (40) est situé du côté intérieur de ladite gorge en forme de V, et l'élément d'étanchéité (52) établit une étanchéité en appliquant une force d'étanchéité qui possède une composante dirigée radialement vers l'intérieur desdits premier et second éléments d'accouplement (10, 30).

13. Dispositif d'accouplement selon l'une quelconque des revendications 1 à 4, comprenant des premier et second éléments d'étanchéité (52, 52') retenus dans des première et seconde gorges respectives en forme de V, l'un exerçant une force d'étanchéité qui possède une composante dirigée radialement vers l'intérieur, et le second ayant une composante dirigée radialement vers l'extérieur, desdits premier et second éléments d'accouplement (10, 30).

**FIG. 1**

**FIG. 2**

**FIG. 3**

**FIG. 4**